# EUROPÄISCHE PATENTSCHRIFT

(11) **EP 2 185 383 B1**
(45) Veröffentlichungstag und Bekanntmachung des Hinweises auf die Patenterteilung: **16.04.2014**
(21) Anmeldenummer: 08785484.0
(22) Anmeldetag: 11.08.2008
(51) Int. Cl.: B60R 16/02

(54) **KABELFÜHRUNG AN EINER FAHRZEUGTÜR ODER FLACHKABELVERBINDUNG**
CABLE FEED DEVICE ON A VEHICLE DOOR, OR FLAT CABLE CONNECTION
GUIDE-CÂBLE SUR UNE PORTE DE VÉHICULE OU CONNEXION DE CÂBLE PLAT

(30) Priorität: 10.08.2007 DE 102007037979
(43) Veröffentlichungstag der Anmeldung: 19.05.2010
(73) Patentinhaber: Johnson Controls Interiors GmbH & Co. KG, 47929 Grefrath (DE)
(72) Erfinder: ZIMMERMANN, Detlef, 51515 Kürten (DE); SCHIDAN, Alexander, 42719 Solingen (DE); MIEGLITZ, Hans-Helmut, 40789 Monheim (DE); NUYAN, Vedat, 42287 Wuppertal (DE); GALAN, Jesus, 40237 Düsseldorf (DE); SCHWEIKER, Thomas, 72218 Wildberg (DE)
(74) Vertreter: Schwöbel, Thilo K.
(86) Internationale Anmeldenummer: PCT/EP2008/006604
(87) Internationale Veröffentlichungsnummer: WO 2009/021706

(56) Entgegenhaltungen:
- FR-A- 2 819 948
- US-A- 4 941 258

## Beschreibung

Die Erfindung betrifft eine Kabelführung für ein Flachkabel bzw. eine Flachkabelverbindung an einer Fahrzeugtür, wobei die Kabelverbindung zwischen der relativ zu einem Fahrzeugchassis beweglichen Fahrzeugtür einerseits und dem Fahrzeugchassis bzw. einer im wesentlichen Fest am Fahrzeugchassis befestigten Komponente andererseits vorgesehen ist, wobei zwischen der Fahrzeugtür und dem Fahrzeugchassis bzw. der Komponente wenigstens eine Dichtung angeordnet ist

Es ist bereits bekannt, Fahrzeuge, insbesondere Kraftfahrzeuge, mit beweglichen, insbesondere schwenkbaren, Fahrzeugtüren vorzusehen, wobei in oder an der Fahrzeugtür elektrische und/oder elektronische Komponenten bzw. Verbraucher, wie beispielsweise Fensterheber, Türschlösser, Beleuchtungseinrichtungen, Akustikeinrichtungen wie Lautsprecher oder dergleichen, angeordnet sind. Diese elektrischen und/oder elektronischen Komponenten bzw. Verbraucher werden hierbei beispielsweise mit einem Rundkabel mit den restlichen elektrischen Komponenten des Fahrzeugs bzw. dem Kabelbaum des Fahrzeugs verbunden, insbesondere über oder durch einen Teil des Fahrzeugchassis, insbesondere die A-Säule und/oder die B-Säule. Die herkömmliche Ausbildung der Kabelführung einer solchen Kabelverbindung insbesondere im Bereich eines Scharniers der Fahrzeugtür erfordert teilweise die Durchführung des Kabels durch zumindest einen Teil der fahrzeugtürseitigen Karosserie (d.h. insbesondere metallene Strukturteile der Tür) und/oder der chassisseitigen Karosserie des Fahrzeugs (insbesondere A-Säule, B-Säule oder dergleichen), was mit einem erhöhten Montageaufwand bei der Montage der bzw. Endmontage der Fahrzeugtür einhergeht. Beispielsweise ist aus der Druckschrift DE 103 35 440 A1 eine Türbaugruppe für ein Kraftfahrzeug mit einem Nassraum, einem Kabelbaum und einer Dichtung bekannt, wobei die Dichtung unmittelbar zwischen der Türbaugruppe und einem karosseriefesten Teil des Kraftfahrzeugs angeordnet ist, wobei die Dichtung einen Naßraum von einem Trockenraum trennt und wobei der Kabelbaum aus einer Öffnung in der Türbaugruppe aus der Türbaugruppe herausgeführt wird und im Nassraum in eine Öffnung in dem karosseriefesten Teil geführt wird. Das Einfädeln des Kabelbaums sowohl in die Öffnung der Türbaugruppe, als auch in die Öffnung des karosseriefesten Teils bei der Montage der Kraftfahrzeugtür verursacht nachteiligerweise einen vergleichsweise großen und zeitaufwändigen Montageaufwand.

Erfindungsgemäß soll dieser Montageaufwand durch die neuartige Gestaltung der Kabelverbindung bzw. Kabelführung und durch die neuartige Gestaltung des Kabels selbst erheblich vereinfacht und kosteneffizienter gestaltet werden.

Die Aufgabe wird dadurch gelöst, dass in einem geschlossenen Zustand der Fahrzeugtür das Flachkabel in einem Durchführungsbereich der Dichtung zwischen der Dichtung und der Fahrzeugtür angeordnet ist oder dass das Flachkabel erfindungsgemäß vollständig auf der Innenraumseite der Dichtung und einer weiteren Dichtung verlaufend vorgesehen ist. Mit anderen Worten, dass in geschlossenem Zustand der Fahrzeugtür das Flachkabel im Bereich einer die Fahrzeugtür gegenüber dem Fahrzeugchassis abdichtenden Dichtung immer zwischen der Dichtung und der fahrzeugtürseitigen Karosserie bzw. dem fahrzeugseitigen (insbesondere metallenen) Strukturteil geführt vorgesehen ist oder dass das Flachkabel vollständig im Innenraum des Fahrzeugs geführt vorgesehen ist. Gemäß der ersten Alternative ist es hierbei möglich, das Flachkabel ohne wesentliche ästhetische Beeinträchtigung in einer Weise zu führen, die eine einfache und leichte Montage der Fahrzeugtür gestattet. Insbesondere wird bei der Montage der Fahrzeugtür kein aufwändiger Montageschritt zum Einfädeln des Flachkabels durch eine Fahrzeugtüröffnung im Nassraum benötigt, wodurch ferner eine zusätzliche Abdichtung dieser Fahrzeugtüröffnung im Nassraum einsparbar ist. Besonders vorteilhaft fungiert bei der erfindungsgemäßen Kabelführung die Dichtung gleichzeitig sowohl zur Abdichtung der Fahrzeugtür, als auch zur Abdichtung der Kabeldurchführung. Gemäß der zweiten Alternative ist es hierbei möglich, das Flachkabel ganz ohne die Notwendigkeit besonderer Vorkehrungen für die spritzwasser- oder regenwassergefährdete Montage auszubilden, wobei ebenfalls eine zusätzliche Abdichtung einer Kabeldurchführung einsparbar ist. Ferner wird somit eine vollständige Vormontage des Flachkabels an einem Verkleidungsmodul ermöglicht, ohne dass nach der Montage des Verkleidungsmoduls an einem Türrohbau ein Einfädeln des Flachkabels durch eine Öffnung im Türrohbau (bzw. im Nassbereich) notwendig ist, so dass während des Montagevorgangs ein vergleichsweise aufwändiger Montageschritt, welcher insbesondere oftmals von Hand durchgeführt werden muss, vollständig einsparbar ist. Vorzugsweise wird im Folgenden die Dichtung auch als innere Dichtung und eine weitere Dichtung auch als äußere Dichtung bezeichnet.

Gemäß einer weiteren Ausführungsform der Kabelführung ist es vorgesehen, dass die Dichtung an der Fahrzeugtür und/oder am Flachkabel bevorzugt mittels einer kraft-, form- und/oder stoffschlüssigen Verbindung befestigt vorgesehen ist, wobei die kraft-, form- und/oder stoffschlüssige Verbindung besonders bevorzugt eine Klemmverbindung und/oder eine Klebeverbindung umfasst. Besonders vorteilhaft ist somit eine Abdichtung im Durchführungsbereich gewährleistet, so dass im Wesentlichen keine Feuchtigkeit entlang des Flachkabels vom Nassbereich zum Trockenbereich gelangt. Ferner wird das Flachkabel im Durchführungsbereich durch die Fixierung der Dichtung zusätzlich fixiert.

Gemäß einer weiteren Ausführungsform der Kabelführung ist es vorgesehen, dass das Flachkabel von einem fahrzeugtürseitigen und/oder chassisseitigen Trockenbereich zu einem fahrzeugtürseitigen und/oder chassisseitigen Nassbereich verlaufend vorgesehen ist, wobei die Dichtung vorzugsweise zur Trennung des Nassbereichs vom Trockenbereich und/oder zur Trennung eines Halbtrockenbereichs vom Trockenbereich vorgesehen ist, so dass besonders vorteilhaft eine Anbindung von elektrischen und/oder elektronischen Komponenten bzw. Verbraucher in der Fahrzeugtür mit elektrischen Komponenten des Fahrzeugs bzw. einem Kabelbaum des Fahrzeugs ohne ästhetische Beeinträchtigung im Fahrzeugtürbereich ermöglicht wird, da das Flachkabel zwischen Fahrzeugtür und Fahrzeugchassis im Nassbereich verläuft und daher bei einer geschlossenen Fahrzeugtür vom Innenraum des Fahrzeugs aus nicht sichtbar ist.

Gemäß einer weiteren Ausführungsform der Kabelführung ist es vorgesehen, dass zwischen der Fahrzeugtür und dem Fahrzeugchassis bzw. der Komponente eine weitere Dichtung angeordnet ist, wobei bevorzugt in einem geschlossenen Zustand der Fahrzeugtür das Flachkabel in einem weiteren Durchführungsbereich der weiteren Dichtung zwischen der weiteren Dichtung und der Fahrzeugtür angeordnet ist und wobei die weitere Dichtung besonders bevorzugt zwischen dem Halbtrockenbereichs und dem Nassbereich angeordnet ist und/oder dass das Flachkabel vom fahrzeugtürseitigen und/oder chassisseitigen Trockenbereich zum fahrzeugtürseitigen und/oder chassisseitigen Halbtrockenbereich verlaufend vorgesehen ist und/oder dass das Flachkabel vom fahrzeugtürseitigen und/oder chassisseitigen Halbtrockenbereich zum fahrzeugtürseitigen und/oder chassisseitigen Nassbereich verlaufend vorgesehen ist. Somit wird besonders vorteilhaft die Führung des Flachkabels vom Trockenbereich über den Halbtrockenbereich bis zum Nassbereich ermöglicht, wobei keine zusätzlichen Dichtungen zur Abdichtung der Flachkabeldurchführungen benötigt werden, da beim Übergang des Flachkabels vom Trockenraum zum Halbtrockenraum eine Abdichtung durch die Dichtung und beim Übergang vom Halbtrockenraum zum Nassbereich eine Abdichtung durch die weitere Dichtung erfolgt.

Gemäß einer weiteren Ausführungsform der Kabelführung ist es vorgesehen, dass das Flachkabel im Durchführungsbereich mechanisch fest mit der Dichtung und/oder im weiteren Durchführungsbereich mechanisch fest mit der weiteren Dichtung verbunden ist, wobei die jeweilige mechanisch feste Verbindung bevorzugt eine stoffschlüssige Verbindung und besonders bevorzugt eine Klebeverbindung umfasst, so dass eine kontinuierliche Fixierung der Dichtung bzw. der weiteren Dichtung auch im Durchführungsbereich bzw. im weiteren Durchführungsbereich gewährleistet ist.

Gemäß einer weiteren Ausführungsform der Kabelführung ist es vorgesehen, dass die Fahrzeugtür im Durchführungsbereich und/oder im weiteren Durchführungsbereich eine Aussparung zur Führung des Flachkabels aufweist, wobei das Flachkabel vorzugsweise in der Aussparung verklebt ist. Besonders vorteilhaft wird somit ein im Wesentlichen geradliniger Verlauf der Dichtung bzw. der weiteren Dichtung im Bereich des Durchführungsbereichs bzw. des weiteren Durchführungsbereichs ermöglicht, so dass beispielsweise die Bildung einer Ausbeulung der Dichtung oder der weiteren Dichtung durch das Flachkabel unterbunden wird.

Gemäß einer weiteren Ausführungsform der Kabelführung ist es vorgesehen, dass die Dichtung im Durchführungsbereich und/oder die weitere Dichtung im weiteren Durchführungsbereich eine Durchgangsaussparung und/oder eine Durchgangsöffnung zur Führung des Flachkabels aufweist, so dass besonders vorteilhaft auf eine vergleichsweise einfache und kostengünstiger Art und Weise eine Kreuzung der Dichtung und/oder der weiteren Dichtung durch das Flachkabel im Wesentlichen senkrecht zum Verlauf der Dichtung und/oder weiteren Dichtung ermöglicht wird. Gleichzeitig wird das Flachkabel durch die Dichtung und/oder weitere Dichtung im Durchgangsbereich und/oder weiteren Durchgangsbereich abgedichtet.

Gemäß einer weiteren Ausführungsform der Kabelführung ist es vorgesehen, dass die Dichtung und/oder die weitere Dichtung Teil einer in einer Türebene umlaufenden Türdichtung der Fahrzeugtür ist, wobei die Dichtung und/oder die weitere Dichtung vorzugsweise zwischen Stoßstellen der umlaufenden Türdichtung angeordnet ist. Besonders bevorzugt ist die umlaufende Dichtung als langgestrecktes flexibles Element ausgebildet, welches zusammen mit der Dichtung bzw. der weiteren Dichtung zu einer vollständig geschlossenen Form angeordnet wird, wobei die geschlossene Form insbesondere parallel zur Türebene ausgerichtet ist. Die Dichtung bzw. weitere Dichtung wird zwischen den Stoßstellen der restlichen umlaufenden Dichtung angeordnet, wobei die Übergangsstellen zwischen den Enden der Dichtung bzw. weiteren Dichtung mit den Stoßstellen vorzugsweise verschweißt und/oder verklebt werden.

Gemäß einer weiteren Ausführungsform der Kabelführung ist es vorgesehen, dass das Flachkabel und die Dichtung und/oder das Flachkabel und die weitere Dichtung an einem Verkleidungsmodul oder an der Fahrzeugtür vormontiert vorgesehen sind. Besonders vorteilhaft wird somit der Montageprozess erheblich vereinfacht, da bei der Montage des Verkleidungsmoduls an einem Türrohbau kein Einfädeln des Flachkabels in eine Öffnung des Türrohbaus notwendig ist.

Gemäß einer weiteren Ausführungsform der Kabelführung ist es vorgesehen, dass das Flachkabel innerhalb des fahrzeugtürseitigen bzw. chassisseitigen Trockenbereichs verlaufend vorgesehen ist, so dass ein Einfädeln und ein Abdichten des Flachkabels in einem Durchführungsbereich zwischen Trockenraum und Naßraum und/oder zwischen Trockenraum und Halbtrockenraum vollständig einsparbar ist.

Gemäß einer weiteren Ausführungsform der Kabelführung ist es vorgesehen, dass eine Kabelspannungseinrichtung zur Übertragung einer mechanischen Zugspannung auf das Flachkabel vorgesehen ist und/oder dass das Flachkabel zumindest teilweise schlaufen- und/oder mäanderförmig verlaufend vorgesehen ist, so dass das Flachkabel beim Öffnen der Fahrzeugtür keinen das Flachkabel beschädigenden Zugspannungen ausgesetzt ist und gleichzeitig die Gefahr des Einklemmens oder Knickens des Flachkabels beim Schließen der Fahrzeugtür reduziert wird.

Gemäß einer weiteren Ausführungsform der Kabelführung ist es vorgesehen, dass das Flachkabel zur Herstellung einer elektrisch leitfähigen Verbindung zwischen elektrischen und/oder elektronischen Komponenten bzw. Verbraucher in der Fahrzeugtür, insbesondere an einem Aggregateträger oder einem Verkleidungsmodul der Fahrzeugtür, mit elektrischen Komponenten des Fahrzeugs bzw. einem Kabelbaum des Fahrzeugs vorgesehen ist. Insbesondere sind die elektronischen Komponenten am Aggregateträger montiert und mittels des Verkleidungsmoduls zum Fahrzeuginnenraum hin abgedeckt, so dass die Montage der Fahrzeugtür durch einen modularen Aufbau von Türrohbau, Aggregateträger und Verkleidungsmodul vergleichsweise einfach und kostengünstig zu realisieren ist.

Ein weiterer Gegenstand der vorliegenden Erfindung ist eine Fahrzeugtür, ein Aggregateträger oder ein Verkleidungsmodul für eine Fahrzeugtür mit einer erfindungsgemäßen Kabelführung bzw. Flachkabelverbindung.

Ausführungsbeispiele der Erfindung sind in den Zeichnungen dargestellt und in der nachfolgenden Beschreibung näher erläutert.

### Figuren

Figuren 1 bis 4 zeigen schematische Ansichten einer Kabelführung gemäß einer ersten Ausführungsform.
Figuren 5 bis 7 zeigen schematische Ansichten einer Kabelführung gemäß einer zweiten Ausführungsform.
Figuren 8 zeigt eine schematische Ansicht einer Kabelführung gemäß einer dritten Ausführungsform der vorliegenden Erfindung.
Figuren 9 bis 12 zeigen schematische Ansichten einer Kabelführung gemäß einer vierten Ausführungsform.
Figuren 13 und 14 zeigen schematische Ansichten einer Kabelführung gemäß einer fünften Ausführungsform.

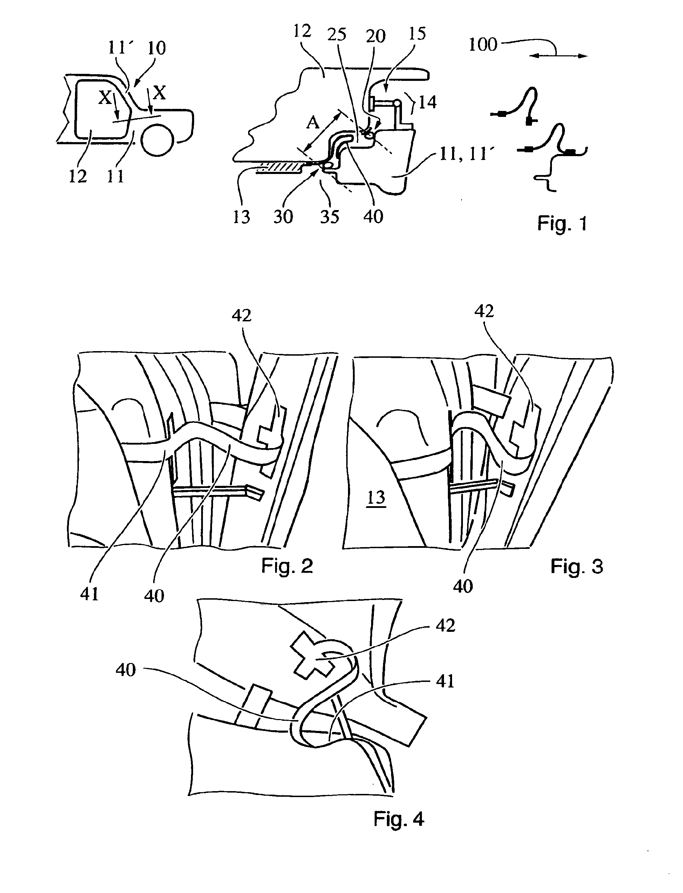

Im linken Teil der Figur 1 ist schematisch ein Fahrzeug bzw. ein Kraftfahrzeug 10 in Seitenansicht dargestellt. Hierbei sind eine Fahrzeugtür 12 und das restliche Fahrzeug 11, welches insbesondere eine Karosserie bzw. ein Fahrzeugchassis umfasst, dargestellt. Die Fahrzeugtür 12 ist relativ zum Fahrzeugchassis bzw. zum restlichen Fahrzeug 11 beweglich vorgesehen. Insbesondere ist die Fahrzeugtür 12 schwenkbar (mittels eines Scharniers) und/oder längsverschieblich relativ zum Fahrzeug 11 angeordnet. Die Fahrzeugtür 12 weist insbesondere ein Verkleidungsmodul 13 und/oder einen Aggregateträger 13 auf. Die Fahrzeugtür 12 ist insbesondere im Bereich einer sogenannten A-Säule 11' bzw. angrenzend an die A-Säule 11' angeordnet, wobei es sich im dargestellten Beispiel um die vordere Fahrzeugtür 12 handelt. Erfindungsgemäß kann es sich bei der Fahrzeugtür 12 jedoch auch um eine hintere Fahrzeugtür 12 des Fahrzeugs 10 (falls eine solche vorhanden ist) handeln. Im Rahmen der vorliegenden Erfindung wird auch das Fahrzeugchassis mit dem Bezugszeichen 11 bezeichnet. Im rechten Teil der **Figur 1** ist eine (vergrößerte) Schnittdarstellung entlang der im linken Teil der **Figur 1** angedeuteten Schnittlinie X-X schematisch dargestellt. Hierbei ist die Schnittlinie X-X im Wesentlichen horizontal geführt. Zwischen der Fahrzeugtür 12 und dem Fahrzeugchassis ist bei einer bekannten Ausgestaltung von Fahrzeugtürabdichtungen eine erste äußere Dichtung 20 (auch als weitere Dichtung 20 bezeichnet) und eine zweite innere Dichtung 30 (auch als Dichtung 30 bezeichnet) vorgesehen. Die äußere erste Dichtung 20 dichtet den Fahrzeuginnenraum im Wesentlichen vor Feuchtigkeit bzw. Spritzwasser ab. Die innere zweite Dichtung 30 dichtet im Wesentlichen zu Komfortzwecken, insbesondere zu akustischen Komfortzwecken ab. Zwischen der ersten Dichtung 20 und der zweiten Dichtung 30 ist ein Halbtrockenbereich 25 (im Bereich des Maßes A) vorgesehen. Ein Nassbereich 15 ist außerhalb der ersten Dichtung 20 (d.h. auf der der zweiten Dichtung 30 abgewandten Seite der ersten Dichtung 20) vorgesehen. Im Nassbereich 15 ist auch das Scharnier 14 zwischen der Fahrzeugtür 12 und dem Fahrzeugchassis 11 angeordnet, falls es sich um eine schwenkbewegliche Fahrzeugtür 12 handelt. Ein Trockenbereich 35 ist innerhalb der zweiten Dichtung 30 (d.h. auf der der ersten Dichtung 20 abgewandten Seite der zweiten Dichtung 30) vorgesehen.

Im Beispiel der **Figur 1** ist eine erste Ausführungsform der Kabelführung eines Flachkabels 40 schematisch dargestellt. Das Kabel 40 verläuft vom Trockenbereich 35 durch einen Durchgangsbereich 31 der zweiten Dichtung 30 hindurch in den Halbtrockenbereich 25 zwischen der Fahrzeugtür 12 und dem Fahrzeugchassis 11. Hierbei ist die zweite Dichtung 30 in der Regel chassisseitig befestigt und bewegt sich nicht mit der Fahrzeugtür 12 mit. Bei geschlossener Fahrzeugtür 12 (wie in **Figur 1** dargestellt) wird dann das Flachkabel 40 von der zweiten Dichtung 30 an die Fahrzeugtür 12 gedrückt. Im offenen Zustand der Fahrzeugtür 12 wird das Flachkabel 40 zumindest teilweise gestreckt und überwindet aufgrund seiner Flexibilität die Streckdistanz zwischen seinem Befestigungspunkt 41 an der Fahrzeugtür 12 und seinem Befestigungspunkt 42 am Fahrzeugchassis 11 zwischen dem geschlossenen bzw. geschlosseneren Zustand (vgl. **Figur 3****)** der Fahrzeugtür und dem offenen Zustand (vgl. **Figur 2****)** der Fahrzeugtür. In **Figur 4** sind der offene Zustand der Fahrzeugtür 12 und der Verlauf der Kabelführung 1 des Flachkabels 40 aus einer anderen Perspektive dargestellt. Zur Überwindung dieser Streckdistanz ist das Flachkabel 40 in Form einer Schlaufe vorgesehen. Weitere mögliche Schlaufenverläufe und damit Kabelführungen des Flachkabels 40 sind im rechten Teil der Figur 1 angedeutet. Die Streckdistanz ist im Wesentlichen von dem radialen Abstand der Befestigungspunkte 41 bzw. 42 relativ zum Drehpunkt des Scharniers und vom maximalen Öffnungsschwenkwinkel der Fahrezugtür 12 abhängig.

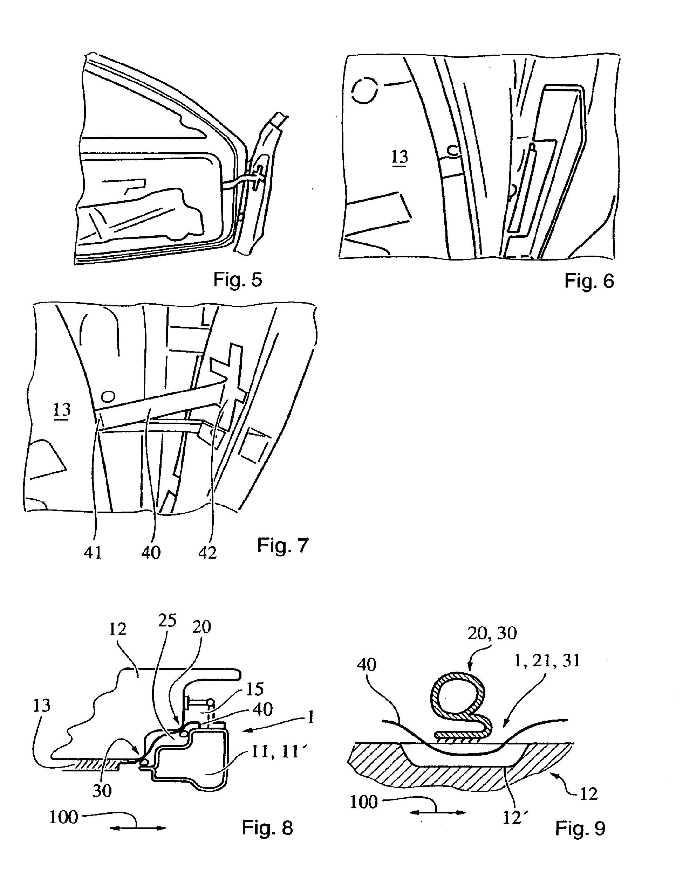

In einer zweiten Ausführungsform dargestellt in den **Figuren 5, 6 und 7****,** welche im Wesentlichen ähnlich der ersten Ausführungsform ist, ist es auch möglich, dass die Streckdistanz über eine Kabelspannungseinrichtung überwunden wird. Hierbei wird das Flachkabel 40 zwischen den Befestigungspunkten 41, 42 im wesentlichen immer gestreckt geführt bzw. immer unter (leichter) (Zug-) Spannung derart geführt, dass das Flachkabel 40 eine im wesentlichen gestreckte oder zumindest in Teilbereichen gestreckte Form bzw. Kabelführung annimmt. **Figuren 5 und 7** zeigen hierbei im Wesentlichen den offenen Zustand der Fahrzeugtür 12 und die **Figur 6** zeigt den zumindest teilweise geschlossenen Zustand der Fahrzeugtür 12 sowie die Kabelführung 1 des Flachkabels 40. Als Kabelspannungseinrichtung kann hierbei beispielsweise eine mechanische Feder, beispielsweise eine Spiralfeder, vorgesehen sein, die eine translatorische Relativbewegung der Fahrzeugtür 12 gegenüber dem Flachkabel 40 zur Überwindung der Streckdistanz vorsieht. Alternativ dazu kann auch beispielsweise ein mechanischer Aufrollmechanismuss vorgesehen sein, wie er beispielsweise bei Gurtaufrollern im Prinzip Anwendung findet, wobei eine rotatorische Relativbewegung der Fahrzeugtür 12 gegenüber dem Flachkabel 40 bzw. einem Teil des Flachkabels 40 zur Überwindung der Streckdistanz vorgesehen ist. Alternativ zu mechanischen Kabelspannungsvorrichtungen können auch elektrische oder hydraulische Kabelspannungsvorrichtungen vorgesehen sein. Die Kabelspannungseinrichtung kann hierbei auch Im chassisseitigen Karosserieelement, beispielsweise in der A-Säule, vorgesehen sein.

In **Figur 8** ist eine schematische Darstellung einer dritten Ausführungsform der Kabelführung 1 des Flachkabels 40 im Bereich zwischen der Fahrzeugtür 12 und dem Fahrzeugchassis 11 bzw. der A-Säule des Fahrzeugs 10 dargestellt, wobei die dritten Ausführungsform im Wesentlichen der ersten Ausführungsform ähnelt. Hierbei verläuft im Unterschied zur ersten Ausführungsform das Flachkabel 40 bis in den Nassbereich 15, d.h. durch einen weiteren Durchgangsbereich 21 der ersten Dichtung 20. Hierbei verläuft das Flachkabel 40 im Bereich der ersten Dichtung 20 immer zwischen der chassisseitigen Karosserie und der fahrzeugtürseitigen Karosserie und muss daher in montagefreundlicher Weise nicht durch etwa eine Öffnung der fahrzeugtürseitigen Karosserie bzw. eines fahrzeugtürseitigen Strukturelements hindurchgeführt werden.

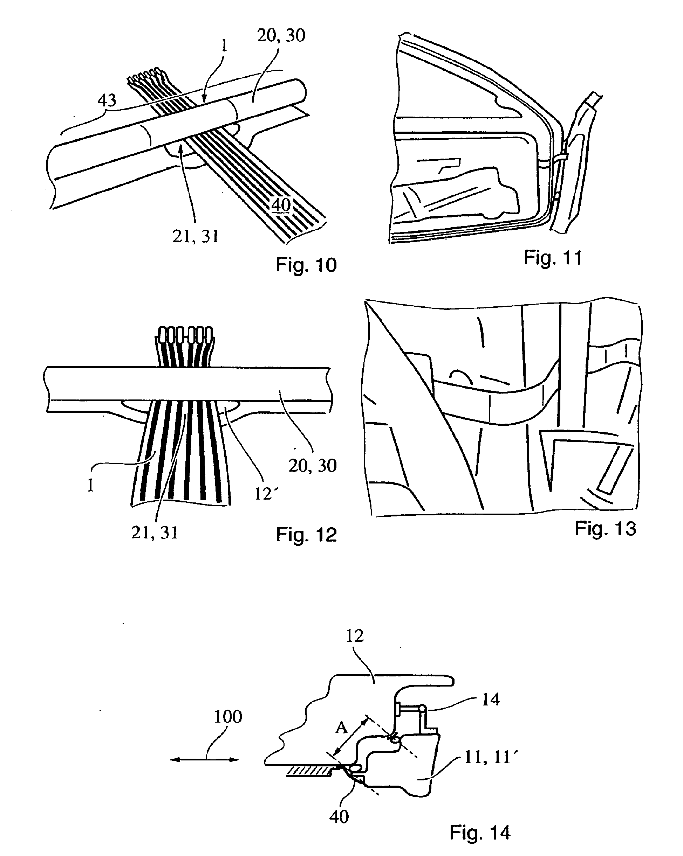

In den **Figur 9 bis 13** ist die Kabelführung 1 des Flachkabels 40 im Bereich der ersten Dichtung 20 gemäß einer vierten Ausführungsform dargestellt, wobei die vierte Ausführungsform im Wesentlichen identisch der dritten Ausführungsform ist. Die Kabelführung 1 sieht hierbei jedoch vor, dass das Flachkabel 40 im Dichtungsbereich 21 zwischen der fahrzeugtürseitigen Karosserie bzw. einem fahrzeugtürseitigen Strukturelement und der ersten Dichtung 20 hindurchgeführt wird. Dies kann beispielsweise dadurch erfolgen, dass ein Teil der ersten Dichtung 20 zusammen mit dem Flachkabel 40 an der Fahrzeugtür 12 montiert wird und an der vorgesehenen Stelle in einer Aussparung 12' in der Fahrzeugtür 12 eingebettet wird. In den Figuren 10 bis 13 ist dies in weiteren Einzelheiten dargestellt. Die erste Dichtung 20 ist im Wesentlichen um die gesamte Fahrzeugtür 12 umlaufen vorgesehen. Hierbei ist herkömmlicherweise ein Stoß der beiden Enden einer solchen ersten Dichtung 20 vorgesehen, der bei der Montage abgedichtet wird, sei es durch Verschweißung der gegenüberliegenden Enden des Stoßes oder durch Verzapfung mittels eines (in die als Hohlrohrdichtung vorgesehene erste Dichtung einsteckbaren) Verbindungselements. Erfindungsgemäß ist im Bereich des Flachkabels 40 ein Stück 43 der ersten Dichtung 20 fest mit dem Flachkabel 40 verbunden (Figuren 10 und 12). Dieses Stück 43 wird bei der Montage der Fahrzeugtür 12 in die gemäß der vorliegenden Erfindung entsprechend unterbrochene erste Dichtung 20 eingefügt, so dass sich an den Enden des Stückes 43 der ersten Dichtung 20 jeweils ein Stoß ergibt, der in herkömmlicherweise abgedichtet wird. Die Durchführung des Flachkabels 40 ist in analoger Weise auch an der zweiten Dichtung 30 möglich, jedoch nicht in den Figuren dargestellt. Die **Figuren 11 und 13** zeigen die Durchführung des Flachkabels 40 zwischen der ersten Dichtung 20 und der fahrzeugtürseitigen Karosserie.

In **Figur 14** ist schematisch eine fünfte Ausführungsform der Kabelführung dargestellt. Hierbei verläuft das Flachkabel 40 ausschließlich im Innenraum des Fahrzeugs 10, d.h. auf der dem Scharnier 14 abgewandten Seiten beider Dichtungen 20, 30. Eine Kabelspannungseinrichtung kann in gleicher Weise wie gemäß der zweiten Ausführungsform **(****Figuren 5, 6 und 7****)** vorgesehen sein. Insbesondere bei der vierten Ausführungsform der Kabelführung 1 kann es vorgesehen sein, dass als zweiter Befestigungspunkt 42 des Flachkabels 40 nicht ein chassisseitiges Karosserieelement, wie beispielsweise die A-Säule oder die B-Säule, vorgesehen ist, sondern eine Innenraumkomponente, insbesondere die Instrumententafel.

Dem gemäß ist das Flachkabel 40 vor der Endmontage der Fahrzeugtür 12 gemäß einer ersten Montagevariante fest mit dem Aggregateträger 13 oder dem Verkleidungsmodul 13 der Fahrzeugtür verbunden. Relativ zu elektrischen und/oder elektromechanischen Aggregaten in der Fahrzeugtür 12 (beispielsweise Türschlösser, Fensterheber oder dergl.) oder relativ zu einem Aggregateträger 13 (nicht dargestellt) wird das Verkleidungsmodul 13 (und damit das Flachkabel 40) unmittelbar vor der (End-) Montage der Fahrzeugtür 12 oder aber bei der (End-)Montage der Fahrzeugtür 12 elektrisch angebunden bzw. kontaktiert, beispielsweise mittels einer Steckverbindung. Der Aggregateträger umfasst in vormontierter Weise eine möglichst große Anzahl von in oder an der Fahrzeugtür 12 zu montierenden Aggregaten und wird bei der (End-)Montage der Fahrzeugtür 12 in diese eingesetzt bzw. mit dieser Verbunden. Gemäß einer zweiten Montagevariante ist das Flachkabel 40 vor der Endmontage der Fahrzeugtür 12 fest mit einem Aggregateträger (nicht dargestellt) der Fahrzeugtür 12 verbunden. Relativ zu elektrischen und/oder elektromechanischen Elementen der Fahrzeugtür 12 (beispielsweise Schalter, Anzeigen oder dergleichen) in dem Verkleidungsmodul 13 wird der Aggregateträger 13 (und damit das Flachkabel 40) unmittelbar vor der (End-) Montage der Fahrzeugtür 12 oder aber bei der (End-)Montage der Fahrzeugtür elektrisch angebunden bzw. kontaktiert, beispielsweise mittels einer Steckverbindung.

### Bezugszeichenliste

- 1: Kabelführung
- 10: Kraftfahrzeug, Fahrzeug
- 11: Restliches Fahrzeug, Fahrzeugchassis
- 11': A-Säule
- 12: Fahrzeugtür
- 12': Aussparung
- 13: Aggregateträger, Verkleidungsmodul
- 14: Scharnier
- 15: Nassbereich
- 20: Weitere Dichtung, Äußere Dichtung
- 21: Weiterer Durchgangsbereich
- 23: Stück der ersten/zweiten Dichtung
- 25: Halbtrockenbereich
- 30: Dichtung, Innere Dichtung
- 31: Durchgangsbereich
- 35: Trockenbereich
- 40: Flachkabel
- 41: Befestigungspunkt an der Fahrzeugtür
- 42: Befestigungspunkt am Fahrzeugchassis
- 100: Türebene

## Patentansprüche

1. Kabelführung (1) für ein Flachkabel (40) bzw. Flachkabelverbindung an einer Fahrzeugtür (12), wobei das Flachkabel (40) zwischen der relativ zu einem Fahrzeugchassis (11, 11 ') beweglichen Fahrzeugtür (12) einerseits und dem Fahrzeugchassis (11, 11') bzw. einer im Wesentlichen fest am Fahrzeugchassis (11, 11') befestigten Komponente andererseits verlaufend vorgesehen ist, wobei zwischen der Fahrzeugtür (12) und dem Fahrzeugchassis (11, 11') bzw. der Komponente wenigstens eine Dichtung (30) angeordnet ist, wobei in einem geschlossenen Zustand der Fahrzeugtür (12) das Flachkabel (40) in einem Durchführungsbereich (31) der Dichtung (30) zwischen der Dichtung (30) und der Fahrzeugtür (12) angeordnet ist, **dadurch gekennzeichnet, dass** das Flachkabel (40) von einem fahrzeugtürseitigen und/oder chassisseitigen Trockenbereich (35) zu einem fahrzeugtürseitigen und/oder chassisseitigen Nassbereich (15) verlaufend vorgesehen ist, wobei die Dichtung (30) zur Trennung eines Halbtrockenbereichs (25) vom Trockenbereich (35) vorgesehen ist, wobei zwischen der Fahrzeugtür (12) und dem Fahrzeugchassis (11, 11') bzw. der Komponente eine weitere Dichtung (20) angeordnet ist, wobei in einem geschlossenen Zustand der Fahrzeugtür (12) das Flachkabel (40) in einem weiteren Durchführungsbereich (21) der weiteren Dichtung (20) zwischen der weiteren Dichtung (20) und der Fahrzeugtür (12) angeordnet ist und wobei die weitere Dichtung (20) zwischen dem Halbtrockenbereich (25) und dem Nassbereich (15) angeordnet ist.

2. Kabelführung (1) nach Anspruch 1, **dadurch gekennzeichnet, dass** die Dichtung (30) an der Fahrzeugtür (12) bevorzugt mittels einer kraft-, form- und/oder stoffschlüssigen Verbindung befestigt vorgesehen ist, wobei die kraft-, form- und/oder stoffschlüssige Verbindung besonders bevorzugt eine Klemmverbindung und/oder eine Klebeverbindung umfasst.

3. Kabelführung (1) nach einem der vorhergehenden Ansprüche, **dadurch gekennzeichnet, dass** das Flachkabel (40) vom fahrzeugtürseitigen und/oder chassisseitigen Trockenbereich (35) zum fahrzeugtürseitigen und/oder chassisseitigen Halbtrockenbereich (25) verlaufend vorgesehen ist und/oder dass das Flachkabel (40) vom fahrzeugtürseitigen und/oder chassisseitigen Halbtrockenbereich (25) zum fahrzeugtürseitigen und/oder chassisseitigen Nassbereich (15) verlaufend vorgesehen ist.

4. Kabelführung (1) nach einem der vorhergehenden Ansprüche, **dadurch gekennzeichnet, dass** das Flachkabel (40) im Durchführungsbereich (31) mechanisch fest mit der Dichtung (30) und/oder im weiteren Durchführungsbereich (21) mechanisch fest mit der weiteren Dichtung (20) verbunden ist, wobei die jeweilige mechanisch feste Verbindung bevorzugt eine stoffschlüssige Verbindung und besonders bevorzugt eine Klebeverbindung umfasst.

5. Kabelführung (1) nach einem der vorhergehenden Ansprüche, **dadurch gekennzeichnet, dass** die Fahrzeugtür (12) im Durchführungsbereich (31) und/oder im weiteren Durchführungsbereich (21) eine Aussparung (12') zur Führung des Flachkabels (40) aufweist, wobei das Flachkabel (40) vorzugsweise in der Aussparung (12') verklebt ist.

6. Kabelführung (1) nach einem der vorhergehenden Ansprüche, **dadurch gekennzeichnet, dass** die Dichtung (30) im Durchführungsbereich (31) und/oder die weitere Dichtung (20) im weiteren Durchführungsbereich (21) eine Durchgangsaussparung und/oder eine Durchgangsöffnung zur Führung des Flachkabels (40) aufweist.

7. Kabelführung (1) nach einem der vorhergehenden Ansprüche, **dadurch gekennzeichnet, dass** die Dichtung (30) und/oder die weitere Dichtung (20) Teil einer in einer Türebene (100) umlaufenden Türdichtung der Fahrzeugtür (12) ist, wobei die Dichtung (30) und/oder die weitere Dichtung (20) vorzugsweise zwischen Stoßstellen der umlaufenden Türdichtung angeordnet ist.

8. Kabelführung (1) nach einem der vorhergehenden Ansprüche, **dadurch gekennzeichnet, dass** das Flachkabel (40) und die Dichtung (30) und/oder das Flachkabel (40) und die weitere Dichtung (20) an der Fahrzeugtür (12) vormontiert vorgesehen sind.

9. Kabelführung (1) nach dem Oberbegriff des Anspruchs 1, **dadurch gekennzeichnet, dass** das Flachkabel (40) vollständig auf der Innenraumseite der Dichtung (30) und/oder einer weiteren Dichtung (20) verlaufend vorgesehen ist.

10. Kabelführung (1) nach Anspruch 9, **dadurch gekennzeichnet, dass** das Flachkabel (40) innerhalb des fahrzeugtürseitigen bzw. chassisseitigen Trockenbereichs (35) verlaufend vorgesehen ist.

11. Kabelführung (1) nach einem der vorhergehenden Ansprüche, **dadurch gekennzeichnet, dass** eine Kabelspannungseinrichtung zur Übertragung einer mechanischen Zugspannung auf das Flachkabel (40) vorgesehen ist und/oder dass das Flachkabel (40) zumindest teilweise schlaufen- und/oder mäanderförmig verlaufend vorgesehen ist.

12. Kabelführung (1) nach einem der vorhergehenden Ansprüche, **dadurch gekennzeichnet, dass** das Flachkabel (40) zur Herstellung einer elektrisch leitfähigen Verbindung zwischen elektrischen und/oder elektronischen Komponenten bzw. Verbraucher in der Fahrzeugtür (12), insbesondere an einem Aggregateträger und/oder an einem Verkleidungsmodul (13) der Fahrzeugtür (12), mit elektrischen Komponenten des Fahrzeugs (10) bzw. einem Kabelbaum des Fahrzeugs (10) vorgesehen ist.

13. Fahrzeugtür (12), Aggregateträger (13) oder Verkleidungsmodul (13) mit einer Kabelführung (1) nach einem der vorhergehenden Ansprüche.

## Claims

1. Cable feed device (1) for a flat cable (40), or a flat cable connection, on a vehicle door (12), with the flat cable (40) being provided so as to run between the vehicle door (12), which can move relative to a vehicle chassis (11, 11'), on the one hand and the vehicle chassis (11, 11') or a component which is essentially firmly attached to the vehicle chassis (11, 11') on the other hand, with at least one seal (30) being arranged between the vehicle door (12) and the vehicle chassis (11, 11') or the component, with the flat cable (40) being arranged in a leadthrough region (31) of the seal (30) between the seal (30) and the vehicle door (12) when the vehicle door (12) is in a closed state, **characterized in that** the flat cable (40) is provided so as to run from a vehicle door-side and/or chassis-side dry region (35) to a vehicle door-side and/or chassis-side wet region (15), with the seal (30) being provided to separate a semi-dry region (25) from the dry region (35), with a further seal (20) being arranged between the vehicle door (12) and the vehicle chassis (11, 11') or the component, with the flat cable (40) being arranged in a further leadthrough region (21) of the further seal (20) between the further seal (20) and the vehicle door (12) when the vehicle door (12) is in a closed state, and with the further seal (20) being arranged between the semi-dry region (25) and the wet region (15).

2. Cable feed device (1) according to Claim 1, **characterized in that** the seal (30) is provided so as to be attached to the vehicle door (12), preferably by means of a force-fitting, interlocking and/or cohesive connection, with the force-fitting, interlocking and/or cohesive connection particularly preferably comprising a clamping connection and/or an adhesive connection.

3. Cable feed device (1) according to one of the preceding claims, **characterized in that** the flat cable (40) is provided so as to run from the vehicle door-side and/or chassis-side dry region (35) to the vehicle door-side and/or chassis-side semi-dry region (25), and/or **in that** the flat cable (40) is provided so as to run from the vehicle door-side and/or chassis-side semi-dry region (25) to the vehicle door-side and/or chassis-side wet region (15).

4. Cable feed device (1) according to one of the preceding claims, **characterized in that** the flat cable (40) is mechanically firmly connected to the seal (30) in the leadthrough region (31) and/or is mechanically firmly connected to the further seal (20) in the further leadthrough region (21), with the respective mechanically firm connection preferably comprising a cohesive connection, and particularly preferably an adhesive connection.

5. Cable feed device (1) according to one of the preceding claims, **characterized in that** the vehicle door (12) has a cutout (12'), for routing the flat cable (40), in the leadthrough region (31) and/or in the further leadthrough region (21), with the flat cable (40) preferably being adhesively bonded in the cutout (12').

6. Cable feed device (1) according to one of the preceding claims, **characterized in that** the seal (30) has a passage cutout and/or a passage opening, for routing the flat cable (40), in the leadthrough region (31) and/or the further seal (20) has a passage cutout and/or a passage opening, for routing the flat cable (40), in the further leadthrough region (21).

7. Cable feed device (1) according to one of the preceding claims, **characterized in that** the seal (30) and/or the further seal (20) are/is part of a door seal of the vehicle door (12), which door seal runs around in a door plane (100), with the seal (30) and/or the further seal (20) preferably being arranged between abutment points of the peripheral door seal.

8. Cable feed device (1) according to one of the preceding claims, **characterized in that** the flat cable (40) and the seal (30) and/or the flat cable (40) and the further seal (20) are provided premounted on the vehicle door (12).

9. Cable feed device (1) according to the preamble of Claim 1, **characterized in that** the flat cable (40) is provided so as to run entirely on the interior face of the seal (30) and/or of a further seal (20).

10. Cable feed device (1) according to Claim 9, **characterized in that** the flat cable (40) is provided so as to run within the vehicle door-side or chassis-side dry region (35).

11. Cable feed device (1) according to one of the preceding claims, **characterized in that** a cable tensioning device is provided for transmitting mechanical tension to the flat cable (40), and/or **in that** the flat cable (40) is provided so as to run at least partially in the manner of a loop and/or in a meandering fashion.

12. Cable feed device (1) according to one of the preceding claims, **characterized in that** the flat cable (40) is provided for establishing an electrically conductive connection between electrical and/or electronic components or loads in the vehicle door (12), in particular on a assembly support and/or on a lining module (13) of the vehicle door (12), and electrical components of the vehicle (10) or a cable harness of the vehicle (10).

13. Vehicle door (12), assembly support (13) or lining module (13) having a cable feed device (1) according to one of the preceding claims.

## Revendications

1. Guide-câble (1) pour un câble plat (40) ou un raccord de câble plat sur une porte de véhicule (12), le câble plat (40) étant prévu de manière à s'étendre entre la porte de véhicule (12) déplaçable par rapport à un châssis du véhicule (11, 11') d'une part et le châssis du véhicule (11, 11') ou un composant fixé de manière sensiblement solidaire au châssis du véhicule (11, 11') d'autre part, au moins une garniture d'étanchéité (30) étant disposée entre la porte du véhicule (12) et le châssis du véhicule (11, 11') ou le composant, le câble plat (40), dans un état fermé de la porte du véhicule (12), étant disposé dans une région de passage (31) de la garniture d'étanchéité (30) entre la garniture d'étanchéité (30) et la porte du véhicule (12), **caractérisé en ce que** le câble plat (40) est prévu de manière à s'étendre depuis une région sèche (35) du côté de la porte du véhicule et/ou du côté du châssis jusqu'à une région humide (15) du côté de la porte du véhicule et/ou du côté du châssis, la garniture d'étanchéité (30) étant prévue pour séparer une région semi-sèche (25) de la région sèche (35), une garniture d'étanchéité supplémentaire (20) étant disposée entre la porte du véhicule (12) et le châssis du véhicule (11, 11') ou le composant, le câble plat (40), dans un état fermé de la porte du véhicule (12), étant disposé dans une région de passage supplémentaire (21) de la garniture d'étanchéité supplémentaire (20) entre la garniture d'étanchéité supplémentaire (20) et la porte du véhicule (12) et la garniture d'étanchéité supplémentaire (20) étant disposée entre la région semi-sèche (25) et la région humide (15).

2. Guide-câble (1) selon la revendication 1, **caractérisé en ce que** la garniture d'étanchéité (30) est prévue de manière fixée à la porte du véhicule (12), de préférence au moyen d'une connexion par engagement par force, par correspondance de forme et/ou par liaison de matière, la connexion par engagement par force, par correspondance de forme et/ou par liaison de matière comprenant particulièrement préférablement une connexion par serrage et/ou une connexion par collage.

3. Guide-câble (1) selon l'une quelconque des revendications précédentes, **caractérisé en ce que** le câble plat (40) est prévu de manière à s'étendre depuis la région sèche (35) du côté de la porte du véhicule et/ou du côté du châssis jusqu'à la région semi-sèche (25) du côté de la porte du véhicule et/ou du côté du châssis et/ou en ce que le câble plat (40) est prévu de manière à s'étendre depuis la région semi-sèche (25) du côté de la porte du véhicule et/ou du côté du châssis jusqu'à la région humide (15) du côté de la porte du véhicule et/ou du côté du châssis.

4. Guide-câble (1) selon l'une quelconque des revendications précédentes, **caractérisé en ce que** le câble plat (40), dans la région de passage (31), est connecté mécaniquement fixement à la garniture d'étanchéité (30) et/ou, dans la région de passage supplémentaire (21), est connecté mécaniquement fixement à la garniture d'étanchéité supplémentaire (20), la connexion mécaniquement fixe respective comprenant de préférence une connexion par engagement par liaison de matière et particulièrement préférablement une connexion collée.

5. Guide-câble (1) selon l'une quelconque des revendications précédentes, **caractérisé en ce que** la porte du véhicule (12), dans la région de passage (31) et/ou dans la région de passage supplémentaire (21), présente un évidement (12') pour le guidage du câble plat (40), le câble plat (40) étant de préférence collé dans l'évidement (12').

6. Guide-câble (1) selon l'une quelconque des revendications précédentes, **caractérisé en ce que** la garniture d'étanchéité (30), dans la région de passage (31), et/ou la garniture d'étanchéité supplémentaire (20), dans la région de passage supplémentaire (21), présente un évidement de passage et/ou une ouverture de passage pour le guidage du câble plat (40).

7. Guide-câble (1) selon l'une quelconque des revendications précédentes, **caractérisé en ce que** la garniture d'étanchéité (30) et/ou la garniture d'étanchéité supplémentaire (20) font partie d'une garniture d'étanchéité de porte de la porte du véhicule (12) circonférentielle dans un plan de la porte (100), la garniture d'étanchéité (30) et/ou la garniture d'étanchéité supplémentaire (20) étant de préférence disposées entre des points d'aboutement de la garniture d'étanchéité de porte circonférentielle.

8. Guide-câble (1) selon l'une quelconque des revendications précédentes, **caractérisé en ce que** le câble plat (40) et la garniture d'étanchéité (30) et/ou le câble plat (40) et la garniture d'étanchéité supplémentaire (20) sont prévus de manière prémontée sur la porte du véhicule (12).

9. Guide-câble (1) selon le préambule de la revendication 1, **caractérisé en ce que** le câble plat (40) est prévu de manière à s'étendre complètement du côté de l'espace interne de la garniture d'étanchéité (30) et/ou d'une garniture d'étanchéité supplémentaire (20).

10. Guide-câble (1) selon la revendication 9, **caractérisé en ce que** le câble plat (40) est prévu de manière à s'étendre à l'intérieur de la région sèche (35) du côté de la porte du véhicule ou du côté du châssis.

11. Guide-câble (1) selon l'une quelconque des revendications précédentes, **caractérisé en ce qu'**un dispositif de tensionnement de câble est prévu pour le transfert d'une tension de traction mécanique au câble plat (40) et/ou **en ce que** le câble plat (40) est prévu de manière à s'étendre au moins en partie en forme de boucle et/ou en forme de méandre.

12. Guide-câble (1) selon l'une quelconque des revendications précédentes, **caractérisé en ce que** le câble plat (40), pour établir une connexion électriquement conductrice entre des composants électriques et/ou électroniques ou des charges dans la porte du véhicule (12), en particulier au niveau d'un support d'unité et/ou au niveau d'un module d'habillage (13) de la porte du véhicule (12), est pourvu de composants électriques du véhicule (10) ou d'un faisceau de câbles du véhicule (10).

13. Porte de véhicule (12), support d'unité (13) ou module d'habillage (13) comprenant un guide-câble (1) selon l'une quelconque des revendications précédentes.
